# EUROPEAN PATENT SPECIFICATION

(11) **EP 0 903 392 B1**
(45) Date of publication and mention of the grant of the patent: **04.06.2003**
(21) Application number: 98307529.2
(22) Date of filing: 16.09.1998
(51) Int. Cl.: C09K 19/54, C09K 19/02

(54) **Supertwisted nematic liquid crystal device and method of making such a device**
Supertwist nematisch Flüssigkristallvorrichtung und Methode zur Herstellung
Dispositif à cristal liquide supertwist nématique et méthode de fabrication

(30) Priority: 19.09.1997 GB 9719862
(43) Date of publication of application: 24.03.1999
(73) Proprietor: Sharp Kabushiki Kaisha, Osaka-shi, Osaka 545-8522 (JP)
(72) Inventor: Molsen, Henning, Oxford OX2 ODF (GB); Tillin, Martin, Abingdon, Oxfordshire OX14 2PG (GB)
(74) Representative: Asquith, Julian Peter

(56) References cited:
- EP-A- 0 313 053
- EP-A- 0 359 146
- WO-A-92/19695
- US-A- 5 674 576
- MITOV M ET AL: "MORPHOLOGICAL STUDY OF A CHIRAL POLYMER NETWORK IN A NEMATIC LIQUIDCRYSTAL FROM A CONCENTRATION GRADIENT" LIQUID CRYSTALS, vol. 23, no. 6, December 1997, pages 903-910, XP000726024
- DATABASE INSPEC INSTITUTE OF ELECTRICAL ENGINEERS, STEVENAGE, GB Inspec No. 5744537, TAKATSU H ET AL: "UV curable liquid crystals and their application" XP002088518 & LIQUID CRYSTALS FOR ADVANCED TECHNOLOGIES. SYMPOSIUM, LIQUID CRYSTALS FOR ADVANCED TECHNOLOGIES. SYMPOSIUM, SAN FRANCISCO, CA, USA, 8-11 APRIL 1996, pages 293-303, 1996, Pittsburgh, PA, USA, Mater. Res. Soc, USA

## Description

The present invention relates to a supertwisted nematic liquid crystal device and to a method of making such a device.

Supertwisted nematic (STN) liquid crystal devices (LCDs) are known for use in displays and are disclosed, for instance, in C M Waters et al, "Mol Cryst Liq Cryst" Vol 123 pp 303 (1985). In such devices, a nematic liquid crystal is disposed in a cell and is arranged to have a twist angle typically of the order of 270 degrees. Design rules for STN displays are disclosed by Waters et al and the influence of various parameters, such as surface pre-tilt, twist angle and elastic constants, are explored.

In such STN devices, each picture element (pixel) is individually controllable so as to be switchable between a bright transmissive or reflective state and a dark transmissive or reflective state. Depending on the construction of the device, these two states correspond to the essentially planar orientation and the field-induced homeotropic orientation of the liquid crystal director.

The transition from the planar orientation to the homeotropic orientation is achieved by applying an electric field along the helical axis of the liquid crystal This can result in either of two competing deformations of the helical pattern of the directors of the liquid crystal molecules. The first is the so-called Freedericksz transition in which the orientation of the local director changes only along a spatial co-ordinate substantially perpendicular to the liquid crystal layer. This is the desired transition. However, the second type of deformation results in a striped texture in which the local optic axis changes its orientation along two spatial co-ordinates, one of which is perpendicular to the liquid crystal layer and the other of which is parallel to the liquid crystal layer. This is disclosed by T Scheffer et al, "Twisted nematic and Supertwisted Nematic Mode LCDs" in "Liquid Crystals - Applications and Uses" Vol 1 pp 232 published by World Scientific Publishing Co Pte Ltd, Singapore 1990. For twist angles of up to about 300 degrees with typical liquid crystals, the stripes are oriented substantially perpendicularly to the local director in the middle of the liquid crystal layer. This transition results in optical hysteresis for relatively low magnitude applied fields, scattering and irreproducible transmission characteristics.

Figure 1 illustrates diagrammatically an STNLCD having three sections or pixels operating in the field-induced homeotropic orientation at 1, in the planar orientation at 2, and with the striped texture at 3. In the field-induced homeotropic orientation, an electric field is applied across the liquid crystal layer of the pixel so that the liquid crystal molecule directors, indicated by short lines such as 4, are oriented throughout the bulk of the liquid crystal layer substantially perpendicularly to the layer. In the planar orientation illustrated at 2, the liquid crystal molecule directors 4 turn through an angle of, for instance, substantially 270 degrees from one surface of the liquid crystal to the other surface thereof. This is the relaxed state of the liquid crystal with no applied electric field across the liquid crystal layer of the pixel.

In the striped texture illustrated at 3, the liquid crystal molecule directors 4 are twisted about an axis perpendicular to the liquid crystal layer, but are also rotated in planes containing that axis.

The graph above the liquid crystal device illustrated in Figure 1 indicates the light transmission for the liquid crystal cell disposed between linear polarisers having orthogonal polarisation directions. In the homeotropic texture illustrated at 1, the birefringence of the liquid crystal layer is such as to have little effect on the polarisation of light passing through the pixel. This is substantially equivalent to the effect of crossed polarisers so that the light transmissivity of the pixel is relatively low, as indicated by the curve at 5.

In the planar texture as illustrated at 2, the liquid crystal layer of the pixel has a birefringence such as to rotate the polarisation of light passing through the layer by 90 degrees. Accordingly, light leaving the pixel has a linear polarisation such that the output polariser provides relatively little attenuation and the pixel appears bright, as indicated by the curve at 6.

The striped texture illustrated at 3 provides a birefringence which varies periodically across the pixel. This leads to light and dark bands as illustrated by the undulating transmissivity curve at 7.

The striped texture is promoted by increasing twist angle and by reducing surface pre-tilt angles in the liquid crystal layer. For instance, Waters et al disclose that increasing the surface pre-tilt lowers the threshold voltage of the Freedericksz transition so as to avoid the formation of the striped texture. However, increasing the surface pre-tilt also increases the relaxation time of the transition from the homeotropic orientation to the planar orientation because the restoring surface forces become smaller as the surface pre-tilt increases. Accordingly, STNLCDs are designed as a compromise between the maximum refresh rate of the display and the likelihood of the occurrence of the striped texture.

D. Fredley et al, Journal of the SID Vol 4 pp 89 (1996) discloses a conventional STNLCD in which a non-chiral non-mesogenic acrylate is cured by ultraviolet radiation while applying a high voltage across the liquid crystal cell to create a polymer network which is aligned substantially homeotropically in the cell. This technique is used to increase the tilt angle in the bulk of the liquid crystal layer, even in the "field-off" state. However, the need to apply a high voltage across the cell during manufacture is a considerable disadvantage because the increased complexity and cost.

H. Takatsu et al, SID95 Digest pp 579 (1995) disclose a guest-host liquid crystal device comprising a cell containing a mixture of nematic liquid crystal, a chiral monoacrylate prepolymer and a black dichroic mixture dye aligned on an alignment layer which gives a low pre-tilt angle of the order of 1 degree. The prepolymer is cured by ultraviolet light which creates a helical side chain polymer. The ratio of the thickness of the liquid crystal cell to the pitch of the helical polymer is made greater than or equal to 1.25.

Such a device shows no focal conic texture and this is said to result from the vanishing twisting power of the fixed chiral polymeric dopend.

When a device of this type is used with a reflector on one side of the liquid crystal cell, a performance of the type illustrated in Figure 2 of the accompanying drawings is achieved. The graph of Figure 2 illustrates reflectance as a percentage against applied voltage for a typical cell of this type. As the voltage rises above a threshold of approximately 2.5 volts, the reflectance increases rapidly to a value above 30% and then rises more gently to a maximum reflectance slightly more than 40%. As the voltage is then decreased, the reflectance falls at first relatively slowly and then relatively rapidly to a relatively low or minimum value at 2 volts.

As is clear from Figure 2, the electrooptic performance of devices of this type possesses hysteresis. The presence of hysteresis is a substantial disadvantage because, when addressing a desired transmission state corresponding to a desired grey level, the addressing device is being switched from a brighter or darker state than the desired grey level. Conversely, if the same addressing voltage is used to address an intermediate grey level from brighter and darker states, the actual intermediate level achieved depends on whether the device is switched from a brighter or darker state. In order to avoid these problems with devices exhibiting hysteresis, it is necessary to ensure that, during each refresh cycle, the pixels are first reset to a common, generally dark, state before addressing the next desired state. However, this adds complexity and increases the time required to refresh the device.

According to a first aspect of the invention, there is provided a supertwisted nematic liquid crystal device comprising first and second substrates defining therebetween a cell containing a mixture of a nematic liquid crystal having a twist angle of between substantially 180° and substantially 360° and a helical polymer network, wherein the polymer of the network comprises at least one polymerised chiral prepolymer. The twist angle may be greater than 240°. The twist angle may be substantially equal to 270°.

The nematic liquid crystal in the cell may have a pre-tilt angle less than 4°. The pre-tilt angle may be substantially equal to 2°. The term "pre-tilt angle" is well known in the liquid crystal field and refers to the angle at which the liquid crystal director is tilted out of the substrate plane due to interaction with an alignment layer.

At least one of the first and second substrates may have an alignment layer for inducing planar alignment.

The polymer of the network may be a networked polymer. The term "networked polymer" as used herein refers to a polymer in a liquid crystal environment which is formed in a liquid crystal phase from mesogenic precursors having polymerisable moieties which can link to more than two other mesogenic precursors. The chiral prepolymer may comprise at least two polymerisable or crosslinkable groups. The prepolymer may comprise a diacrylate.

The polymer network may comprise at least 1% by weight of the mixture. The polymer network may comprise at least 1.5% by weight of the mixture.

The polymer network may comprise less than 20% by weight of the mixture. The polymer network may comprise less than 10% by weight of the mixture. The polymer network may comprise less than 5% by weight of the mixture.

The cell may be disposed between first and second polarisers. The first and second polarisers may have linear polarising directions oriented at between 0° and 90° with respect to each other.

The cell may be disposed between a polariser and a reflector.
An optical retarder may be disposed between the mixture and the polariser or between the mixture and the reflector.

According to a second aspect of the invention, there is provided a method of making a supertwisted nematic liquid crystal device, comprising juxtaposing first and second substrates to define there between a cell, filling the cell with a mixture comprising a nematic liquid crystal having a twist angle of between substantially 180° and substantially 360° and a chiral prepolymer, and polymerising or crosslinking the prepolymer to form a polymer network.

The mixture may comprise a non-chiral prepolymer in addition to the chiral prepolymer.

The prepolymer may be a networkable prepolymer.

The chiral prepolymer may have at least two polymerisable or crosslinkable groups. The prepolymer may comprise a diacrylate.

The twist angle may be greater than 240°. The twist angle may be substantially equal to 270°.

The nematic liquid crystal in the cell may have a pre-tilt angle less than 4°. The pre-tilt angle may be substantially equal to 2°.

The method may comprise forming on at least one of the first and second substrates, prior to the juxtaposition, an alignment layer for inducing planar alignment.

The prepolymer may comprise at least 1% by weight of the mixture. The prepolymer may comprise at least 1.5% by weight of the mixture.

The prepolymer may comprise less than 20% by weight of the mixture. The prepolymer may comprise less than 10% by weight of the mixture. The prepolymer may comprise less than 5% by weight of the mixture.

The liquid crystal may have positive dielectric anisotropy and the polymerising or crosslinking may be performed in the absence of an applied field across the cell.

The liquid crystal may have negative dielectric anistropy and, during polymerising or crosslinking, a field which provides planar alignment of the liquid crystal may be applied across the cell.

Locking the chirality in a polymer network prevents or substantially reduces the possibility of the formation of the striped texture. It is thus possible to produce a 270° STN device with an alignment layer inducing a pre-tilt 2° which can be commercially manufactured. Such a device is advantageous compared with known STN devices where the twist is limited to 240° with alignment layers inducing a relatively high pre-tilt, for instance greater than 4°. Further, it is possible to avoid the use of commercially unviable evaporated alignment layers, such as silicon oxide, which would otherwise be required in order to provide high pre-tilt alignment layers permitting a 270° twist.

The use of a networked polymer instead of a side chain polymer provides more stable polymer orientation and avoids hysteresis in the electrooptic curve. The use of low pre-tilt alignment layers reduces device switching times so that the required time to switch between the two states of a typical device may be of the order 40 milliseconds.

The invention will be further described, by way of example, with reference to the accompanying drawings in which:
Figure 1 is a diagrammatic cross sectional view with associated transmissivity curves of a known type of STN device;
Figure 2 is a graph of reflectance in per cent against applied voltage illustrating an electrooptic curve of a known type of twisted nematic liquid crystal device including a black dichroic dye mixture;
Figure 3 is a diagrammatic cross-sectional view of an STN device prior to polymerisation or crosslinking;
Figure 4 is a diagrammatic cross-sectional view of the device of Figure 3 after polymerisation or crosslinking to provide an STNLCD constituting a first embodiment of the invention;
Figure 5 is a graph of transmittance against applied voltage for the devices shown in Figure 3 and 4 with cross polarisers;
Figure 6 is a graph of transmittance in arbitrary units against applied voltage for a device of the type shown in Figure 4 with parallel polarisers;
Figure 7 is a diagrammatic cross-sectional view of an STNLCD of the reflective type constituting a second embodiment of the invention; and
Figure 8 is a diagrammatic cross-sectional view of an STNLCD constituting a third embodiment of the invention.

Like reference numerals refer to like parts throughout the drawings.

The device shown in Figure 3 comprises a liquid crystal cell disposed between external polarisers 10 and 11. The polarisers 10 and 11 are linear polarisers and their polarisation directions may be between 0° and 90° with respect to each other.

The liquid crystal cell comprises an upper substrate 12 and a lower substrate 13. The substrates 12 and 13 carry addressing arrangements shown as electrodes 14 and 15. For instance, in the case of passive matrix addressing, the electrodes 14 and 15, which are transparent and may be made of indium tin oxide (ITO), comprise parallel strips oriented such that the longitudinal direction of the electrodes 14 is orthogonal to the longitudinal direction of the electrodes 15. The intersections or overlaps of the electrodes 14 and 15 define picture elements (pixels) which are independently addressable.

Alternatively, an active matrix addressing arrangement may be provided. In such an arrangement, one of the electrodes such as 15 is a plan electrode, ie: extends substantially continuously throughout the device. The other electrode, such as 14, is divided into individual pixel electrodes, each of which is controlled by one or more active devices provided on the substrate 12, for instance, in the form of thin film transistors made by silicon-on-glass- techniques.

The electrodes 14 and 15 are covered by alignment layers 16 and 17, respectively. Two alignment layers are shown in the embodiment illustrated in Figure 3 but, in alternative arrangements, it is possible to omit one of the alignment layers. The alignment layers 16 and 17 are, for instance, made of rubbed polyimide, such as P12555 available from Dupont, with the rubbing directions being orthogonal and such as to provide a left-handed liquid crystal twist. The alignment layers provide a relatively low pre-tilt angle, for instance of 2 degrees.

During manufacture, the liquid crystal cell is filled with a mixture 18 comprising a liquid crystal and a prepolymer. For example, the liquid crystal may be of a nematic type and may comprise ZLI2293 available from Merck in Germany. The prepolymer may comprise a chiral diacrylate and a non-chiral diacylate. The chiral diacrylate comprises 0.42% by weight of the mixture and may be LC481 which is available from BASF in Germany and which has a helical twisting power substantially equal to 34.5 per micrometre. The non-chiral diacrylate may comprise 1.5% by weight of the mixture and may be RM258 available from Merck in the UK.

The device comprises a supertwisted nematic device with the liquid crystal in the mixture 18 exhibiting a twist substantially equal to 270°, the helical pitch being substantially equal to 6.7 micrometres.

The diacrylates in the mixture 18 are photopolymerisable and, after filling of the cell, are exposed to Type A ultraviolet radiation with an intensity of 14 milliwatts per square centimetre applied for 30 seconds. As a result, the diacrylates are crosslinked to form a polymer network so that the cell contains a mixture of the liquid crystal and the polymer network as shown at 19 in Figure 4.

Figure 5 illustrates the performance of the device before photopolymerisation as illustrated in Figure 3 and after photopolymerisation as illustrated in Figure 4. In particular, the electrooptic curve for the device before photopolymerisation is shown at 20 whereas that for the device after photopolymerisation is shown at 21. The device is of the type having polarisers 10 and 11 aligned with the polarising directions orthogonal so as to provide a normally-white or normally-bright device. The electrooptic curve 21 is substantially steeper than the curve 20 and this is substantially due to the reduction or suppression of the formation of the striped texture during switching.

As a result of locking the chirality of the polymer network, the possibility of formation of the striped texture is prevented or substantially reduced. Thus, it is possible to produce a 270° STN device with an alignment layer inducing a pre-tilt of 2° which can be commercially manufactured. Such a device is advantageous as compared with conventional STN devices where the twist is limited to 240° with alignment layers inducing a relatively high pre-tilt, for instance greater than 4°. Moreover, it is possible to avoid the use of commercially unviable evaporated alignment layers, such as silicone oxide, which would otherwise be required in order to provide high pre-tilt alignment layers permitting a 270° twist.

Figure 6 is an electrooptic curve for a device of the type shown in Figure 4 but with the polarisation directions of the polarisers 10 and 11 parallel to each other to provide a normally-black or a normally-dark display. The curves 21 and 22 are obtained for switching in both directions between dark and bright states and illustrate that devices of the type shown in Figure 4 are substantially free from hysteresis.

The use of a networked polymer as compared to a side chain polymer provides more stable polymer orientation and avoids hysteresis in the electrooptic curve. Additionally, the use of low pre-tilt alignment layers reduces device switching times so that. the required time to switch between two states of a typical device may be of the order of 40 milliseconds.

The device shown in Figure 4 is of the transmissive type whereas Figure 7 illustrates a device of the reflective type. In this case, the polariser 11 is omitted and the electrode 15 is replaced by a combined electrode and mirror 25. Otherwise, the device may be of the same type as illustrated in Figure 4 and may be made in the same way.

The liquid crystals of the mixtures 19 shown in Figures 4 and 7 are of the positive dielectric anistropy type and the photopolymerisation of the chiral and non-chiral prepolymers having at least two polymerisal groups (diacrylates in the examples specifically described hereinbefore) occurs with no applied field across the liquid crystal cell. However, it is also possible to use nematic liquid crystal of negative dielectric anistropy. In this case, as shown in Figure 8, a signal generator 16 applies a sufficiently high electric field across the mixture in the cell during photopolymerisation so that the liquid crystal is substantially planar during the polymerisation. This results in a mixture 27 which, when the field is removed, comprises a planar polymer network with a homeotropic liquid crystal.

## Claims

1. A supertwisted nematic liquid crystal device comprising first and second substrates defining therebetween a cell containing a mixture of a nematic liquid crystal having a twist angle of between 180° and 360° and a helical polymer network, **characterised in that** the polymer of the network comprises at least one polymerised chiral prepolymer.

2. A device as claimed in claim 1, **characterised in that** the twist angle is greater than 240°.

3. A device as claimed in claim 1, **characterised in that** the twist angle is substantially equal to 270°.

4. A device as claimed in any one of the preceding claims, **characterised in that** the nematic liquid crystal in the cell has a pre-tilt angle less than 4°.

5. A device as claimed in claim 4, **characterised in that** the pre-tilt angle is substantially equal to 2°.

6. A device as claimed in any one of the preceding claims, **characterised in that** at least one of the first and second substrates has an alignment layer for inducing planar alignment.

7. A device as claimed in any one of the preceeding claims, **characterised in that** the polymer of the network is a networked polymer.

8. A device as claimed in any preceding claim, **characterised in that** the chiral prepolymer comprises at least two polymerisable or crosslinkable groups.

9. A device as claimed in any preceding claim, **characterised in that** the prepolymer comprises a diacrylate.

10. A device as claimed in any one of the preceding claims, **characterised in that** the polymer network comprises at least one per cent by weight of the mixture.

11. A device as claimed in claim 10, **characterised in that** the polymer comprises at least 1.5 per cent by weight of the mixture.

12. A device as claimed in any one of the preceding claims, **characterised in that** the polymer network comprises less than 20 per cent by weight of the mixture.

13. A device as claimed in claim 12, **characterised in that** the polymer network comprises less than ten per cent by weight of the mixture.

14. A device as claimed in claim 13, **characterised in that** the polymer network comprises less than five per cent by weight of the mixture.

15. A device as claimed in any one of the preceding claims, **characterised in that** the cell is disposed between first and second polarisers.

16. A device as claimed in claim 15, **characterised in that** the first and second polarisers have linear polarising directions, oriented at between 0° and 90° with respect to each other.

17. A device as claimed in any one of claims 1 to 14, **characterised in that** the cell is disposed between a polariser and a reflector.

18. A method of making a supertwisted nematic liquid crystal device, comprising juxtaposing first and second substrates to define therebetween a cell, filling the cell with a mixture comprising a nematic liquid crystal having a twist angle of between 180° and 360° and a prepolymer, and polymerising or crosslinking the prepolymer to form a polymer network, **characterised in that** the prepolymer is a chiral prepolymer.

19. A method as claimed in claim 18, **characterised in that** the mixture comprises a non-chiral prepolymer in addition to the chiral prepolymer.

20. A method as claimed in claim 18 or 19, **characterised in that** the prepolymer is a networkable prepolymer.

21. A method as claimed in any one of claims 18 to 20, **characterised in that** the chiral prepolymer has at least two polymerisable or crosslinkable groups.

22. A method as claimed in claims 21, **characterised in that** the prepolymer comprises a diacrylic.

23. A method as claimed in any one of claims 18 to 22, **characterised in that** the twist angle is greater than 240°.

24. A method as claimed in claim 23, **characterised in that** the twist angle is substantially equal to 270°.

25. A method as claimed in any one of claims 18 to 24, **characterised in that** the nematic liquid crystal in the cell has a pre-tilt angle less than 4°.

26. A method as claimed in claim 25, **characterised in that** the pre-tilt angle is substantially equal to 2°.

27. A method as claimed in any one of claims 18 to 26, **characterised by** forming on at least one of the first and second substrates, prior to the juxtaposition, an alignment layer for inducing planar alignment.

28. A method as claimed in any one of claims 18 to 27, **characterised in that** the prepolymer comprises at least one per cent by weight of the mixture.

29. A method as claimed in claim 28, **characterised in that** the prepolymer comprises at least 1.5 per cent by weight of the mixture.

30. A method as claimed in any one of claims 18 to 29, **characterised in that** the prepolymer comprises less than 20 per cent by weight of the mixture.

31. A method as claimed in claim 30, **characterised in that** the prepolymer comprises less than ten per cent by weight of the mixture.

32. A method as claimed in claim 31, **characterised in that** the prepolymer comprises less than five per cent by weight of the mixture.

33. A method as claimed in any one of claims 18 to 32, **characterised in that** the liquid crystal has positive dielectric anisotropy and the polymerising or crosslinking is performed in the absence of an applied field across the cell.

34. A method as claimed in any one of claims 18 to 32, **characterised in that** the liquid crystal has negative dielectric anisotropy and, during the polymerising or crosslinking, a field which provides planar alignment of the liquid crystal is applied across the cell.

## Patentansprüche

1. Superverdrillt-nematische Flüssigkristallvorrichtung mit einem ersten und einem zweiten Substrat, die zwischen sich eine Zelle bilden, die ein Gemisch eines nematischen Flüssigkristalls mit einem Verdrillungswinkel von 180° und 360° und einem Wendelpolymer-Netzwerk enthält, **dadurch gekennzeichnet, dass** das Polymer des Netzwerks mindestens ein polymerisiertes, chirales Vorpolymer enthält.

2. Vorrichtung nach Anspruch 1, **dadurch gekennzeichnet, dass** der Verdrillungswinkel größer als 240° ist.

3. Vorrichtung nach Anspruch 1, **dadurch gekennzeichnet, dass** der Verdrillungswinkel im Wesentlichen 270° entspricht.

4. Vorrichtung nach einem der vorstehenden Ansprüche, **dadurch gekennzeichnet, dass** der nematische Flüssigkristall in der Zelle einen Vorkippwinkel unter 4° aufweist.

5. Vorrichtung nach Anspruch 4, **dadurch gekennzeichnet, dass** der Vorkippwinkel im Wesentlichen 2° beträgt.

6. Vorrichtung nach einem der vorstehenden Ansprüche, **dadurch gekennzeichnet, dass** vom ersten und zweiten Substrat mindestens eines eine Ausrichtungsschicht zum Hervorrufen planarer Ausrichtung aufweist.

7. Vorrichtung nach einem der vorstehenden Ansprüche, **dadurch gekennzeichnet, dass** das Polymer des Netzwerks ein als Netzwerk erstelltes Polymer ist.

8. Vorrichtung nach einem der vorstehenden Ansprüche, **dadurch gekennzeichnet, dass** das chirale Vorpolymer mindestens zwei polymerisierbare oder vernetzbare Gruppen enthält.

9. Vorrichtung nach einem der vorstehenden Ansprüche, **dadurch gekennzeichnet, dass** das Vorpolymer ein Diacrylat enthält.

10. Vorrichtung nach einem der vorstehenden Ansprüche, **dadurch gekennzeichnet, dass** das Polymernetzwerk mindestens ein Gewichtsprozent des Gemischs ausmacht.

11. Vorrichtung nach Anspruch 4, **dadurch gekennzeichnet, dass** das Polymer mindestens 1,5 Gewichtsprozent des Gemischs ausmacht.

12. Vorrichtung nach einem der vorstehenden Ansprüche, **dadurch gekennzeichnet, dass** Polymernetzwerk weniger als 20 Gewichtsprozent des Gemischs ausmacht.

13. Vorrichtung nach Anspruch 12, **dadurch gekennzeichnet, dass** das Polymernetzwerk weniger als 10 Gewichtsprozent des Gemischs ausmacht.

14. Vorrichtung nach Anspruch 13, **dadurch gekennzeichnet, dass** das Polymernetzwerk weniger als 5 Gewichtsprozent des Gemischs ausmacht.

15. Vorrichtung nach einem der vorstehenden Ansprüche, **dadurch gekennzeichnet, dass** die Zelle zwischen einem ersten und einem zweiten Polarisator angeordnet ist.

16. Vorrichtung nach Anspruch 15, **dadurch gekennzeichnet, dass** der erste und der zweite Polarisator lineare Polarisationsrichtungen aufweisen, die zwischen 0° und 90° zueinander ausgerichtet sind.

17. Vorrichtung nach einem der Ansprüche 1 bis 17, **dadurch gekennzeichnet, dass** die Zelle zwischen einem Polarisator und einem Reflektor angeordnet ist.

18. Verfahren zum Herstellen einer superverdrillt-nematischen Flüssigkristallvorrichtung, bei dem ein erstes und ein zweites Substrat so benachbart zueinander angeordnet werden, dass dadurch eine Zelle gebildet ist, Füllen der Zelle mit einem Gemisch aus einem nematischen Flüssigkristall mit einem Verdrillungswinkel zwischen 180° und 360° und einem Vorpolymer, und Polymerisieren oder Vernetzen des Vorpolymers zum Erzeugen eines Polymernetzwerks, **dadurch gekennzeichnet, dass** das Vorpolymer ein chirales Vorpolymer ist.

19. Verfahren nach Anspruch 18, **dadurch gekennzeichnet, dass** das Gemisch zusätzlich zum chiralen Vorpolymer ein nicht-chirales Vorpolymer enthält.

20. Verfahren nach Anspruch 18 oder 19, **dadurch gekennzeichnet, dass** das Vorpolymer ein als Netzwerk erstelltes Vorpolymer ist.

21. Verfahren nach einem der Ansprüche 18 bis 20, **dadurch gekennzeichnet, dass** das chirale Vorpolymer mindestens zwei polymerisierbare oder vernetzbare Gruppen aufweist.

22. Verfahren nach Anspruch 21, **dadurch gekennzeichnet, dass** das Vorpolymer ein Diacryl enthält.

23. Verfahren nach einem der Ansprüche 18 bis 22, **dadurch gekennzeichnet, dass** der Verdrillungswinkel größer als 240° ist.

24. Verfahren nach Anspruch 23, **dadurch gekennzeichnet, dass** der Verdrillungswinkel im Wesentlichen 270° entspricht.

25. Verfahren nach einem der Ansprüche 18 bis 24, **dadurch gekennzeichnet, dass** der nematische Flüssigkristall in der Zelle einen Vorkippwinkel unter 4° aufweist.

26. Verfahren nach Anspruch 25, **dadurch gekennzeichnet, dass** der Vorkippwinkel im Wesentlichen 2° entspricht.

27. Verfahren nach einem der Ansprüche 18 bis 26, **gekennzeichnet durch** das Herstellen einer Ausrichtungsschicht zum Hervorrufen einer planaren Ausrichtung auf dem ersten und/oder zweiten Substrat, bevor diese benachbart zueinander angeordnet werden.

28. Verfahren nach einem der Ansprüche 18 bis 27, **dadurch gekennzeichnet, dass** das Vorpolymer mindestens ein Gewichtsprozent des Gemischs ausmacht.

29. Verfahren nach Anspruch 28, **dadurch gekennzeichnet, dass** das Vorpolymer mindestens 1,5 Gewichtsprozent des Gemischs ausmacht.

30. Verfahren nach einem der Ansprüche 18 bis 29, **dadurch gekennzeichnet, dass** das Vorpolymer weniger als 20 Gewichtsprozent des Gemischs ausmacht.

31. Verfahren nach Anspruch 30, **dadurch gekennzeichnet, dass** das Vorpolymer weniger als 10 Gewichtsprozent des Gemischs ausmacht.

32. Verfahren nach Anspruch 31, **dadurch gekennzeichnet, dass** das Vorpolymer weniger als 5 Gewichtsprozent des Gemischs ausmacht.

33. Verfahren nach einem der Ansprüche 18 bis 32, **dadurch gekennzeichnet, dass** der Flüssigkristall positive dielektrische Anisotropie aufweist und die Polymerisierung oder Vernetzung in Abwesenheit eines an die Zelle angelegten Felds ausgeführt wird.

34. Verfahren nach einem der Ansprüche 18 bis 32, **dadurch gekennzeichnet, dass** der Flüssigkristall negative dielektrische Anisotropie aufweist und während des Polymerisierens oder Vernetzens an die Zelle ein Feld angelegt wird, das für planare Ausrichtung des Flüssigkristalls sorgt.

## Revendications

1. Dispositif à cristal liquide nématique supertorsadé comprenant un premier et un second substrat définissant entre eux une cellule contenant un mélange d'un cristal liquide nématique ayant un angle de torsion entre 180 degrés et 360° et un réseau polymère hélicoïdal, **caractérisé en ce que** le polymère du réseau comprend au moins un prépolymère chiral polymérisé.

2. Dispositif selon la revendication 1, **caractérisé en ce que** l'angle de torsion est supérieur à 240°.

3. Dispositif selon la revendication 1, **caractérisé en ce que** l'angle de torsion est sensiblement égal à 270°.

4. Dispositif selon l'une quelconque des revendications précédentes, **caractérisé en ce que** le cristal liquide nématique de la cellule a un angle de pré-inclinaison inférieur à 4°.

5. Dispositif selon la revendication 4, **caractérisé en ce que** l'angle de pré-inclinaison est sensiblement égal à 2°.

6. Dispositif selon l'une quelconque des revendications précédentes, **caractérisé en ce qu'**au moins l'un des premier et second substrats a une couche d'alignement pour induire un alignement planar.

7. Dispositif selon l'une quelconque des revendications précédentes, **caractérisé en ce que** le polymère du réseau est un polymère réticulé.

8. Dispositif selon l'une quelconque des revendications précédentes, **caractérisé en ce que** le prépolymère chiral comprend au moins deux groupes polymérisables ou réticulables.

9. Dispositif selon l'une quelconque des revendications précédentes, **caractérisé en ce que** le prépolymère comprend un diacrylate.

10. Dispositif selon l'une quelconque des revendications précédentes, **caractérisé en ce que** le réseau polymère comprend au moins un pour cent en poids du mélange.

11. Dispositif selon la revendication 10, **caractérisé en ce que** le polymère comprend au moins 1,5% en poids du mélange.

12. Dispositif selon l'une quelconque des revendications précédentes, **caractérisé en ce que** le réseau polymère comprend moins de 20% en poids du mélange.

13. Dispositif selon la revendication 12, **caractérisé en ce que** le réseau polymère comprend moins de 10% en poids du mélange.

14. Dispositif selon la revendication 13, **caractérisé en ce que** le réseau polymère comprend moins de 5% en poids du mélange.

15. Dispositif selon l'une quelconque des revendications précédentes, **caractérisé en ce que** la cellule est disposée entre un premier et un second polariseurs.

16. Dispositif selon la revendication 15, **caractérisé en ce que** le premier et le second polariseurs ont des directions de polarisation linéaires orientées entre 0 et 90° l'une par rapport à l'autre.

17. Dispositif selon l'une quelconque des revendications 1 à 14, **caractérisé en ce que** la cellule est disposée entre un polariseur et un réflecteur.

18. Procédé de fabrication d'un dispositif à cristal liquide nématique supertorsadé, comprenant la juxtaposition d'un premier et d'un second substrats pour définir entre eux une cellule, le remplissage de la cellule par un mélange comprenant un cristal liquide nématique ayant un angle de torsion entre 180° et 360° et un prépolymère, et la polymérisation ou la réticulation du prépolymère pour former un réseau polymère, **caractérisé en ce que** le prépolymère est un prépolymère chiral.

19. Procédé selon la revendication 18, **caractérisé en ce que** le mélange comprend un prépolymère non chiral en plus du prépolymère chiral.

20. Procédé selon la revendication 18 ou 19, **caractérisé en ce que** le prépolymère est un prépolymère réticulable.

21. Procédé selon l'une quelconque des revendications 18 à 20, **caractérisé en ce que** le prépolymère chiral a au moins deux groupes polymérisables ou réticulables.

22. Procédé selon la revendication 21, **caractérisé en ce que** le prépolymère comprend un diacrylique.

23. Procédé selon l'une quelconque des revendications 18 à 22, **caractérisé en ce que** l'angle de torsion est supérieur à 240°.

24. Procédé selon la revendication 23, **caractérisé en ce que** l'angle de torsion est sensiblement égal à 270°.

25. Procédé selon l'une quelconque des revendications 18 à 24, **caractérisé en ce que** le cristal nématique liquide de la cellule a un angle de pré-inclinaison inférieur à 4°.

26. Procédé selon la revendication 25, **caractérisé en ce que** l'angle de pré-inclinaison est sensiblement égal à 2°.

27. Procédé selon l'une quelconque des revendications 18 à 26, **caractérisé par** la formation, sur au moins l'un des premier et second substrats, avant juxtaposition, d'une couche d'alignement pour induire un alignement planar.

28. Procédé selon l'une quelconque des revendications 18 à 27, **caractérisé en ce que** le prépolymère comprend au moins un pour cent en poids du mélange.

29. Procédé selon la revendication 28, **caractérisé en ce que** le prépolymère comprend au moins 1,5% en poids du mélange.

30. Procédé selon l'une quelconque des revendications 18 à 29, **caractérisé en ce que** le prepolymère comprend moins de 20% en poids du mélange.

31. Procédé selon la revendication 30, **caractérisé en ce que** le prépolymère comprend moins de 10% en poids du mélange.

32. Procédé selon la revendication 31, **caractérisé en ce que** le prépolymère comprend moins de 5% en poids du mélange.

33. Procédé selon l'une quelconque des revendications 18 à 32, **caractérisé en ce que** le cristal liquide a une anisotropie diélectrique positive et la polymérisation ou la réticulation est effectuée en présence d'un champ appliqué aux bornes de la cellule.

34. Procédé selon l'une quelconque des revendications 18 à 32, **caractérisé en ce que** le cristal liquide a une anisotropie diélectrique négative et, au cours de la polymérisation ou de la réticulation, un champ qui assure un alignement planar du cristal liquide est appliqué aux bornes de la cellule.
